(19) Europäisches Patentamt

European Patent Office

Office européen des brevets

(11) **EP 1 537 351 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(21) Anmeldenummer: **04766254.9**

(22) Anmeldetag: **19.07.2004**

(51) Int Cl.:
*F16L 19/025* (2006.01)    *F02M 55/00* (2006.01)

(86) Internationale Anmeldenummer:
**PCT/EP2004/051535**

(87) Internationale Veröffentlichungsnummer:
**WO 2005/010421 (03.02.2005 Gazette 2005/05)**

(54) **DRUCKLEITUNG**

PRESSURE LINE

CONDUITE DE PRESSION

(84) Benannte Vertragsstaaten:
**DE FR GB IT**

(30) Priorität: **29.07.2003 DE 10334622**

(43) Veröffentlichungstag der Anmeldung:
**08.06.2005 Patentblatt 2005/23**

(73) Patentinhaber: **SIEMENS AKTIENGESELLSCHAFT**
**80333 München (DE)**

(72) Erfinder: **WILLIG, Burkhard**
**63768 Hösbach (DE)**

(56) Entgegenhaltungen:
**DE-A- 10 143 740**

**Beschreibung**

Die Erfindung betrifft eine Druckleitung, insbesondere zur dichten Verbindung mit einem Bauteil, nach dem Oberbegriff des Patentanspruchs 1.

Druckleitungen werden insbesondere bei Dieselmotoren mit sogenannten Common-Rail-Systemen eingesetzt. Der Kraftstoff wird dabei mittels einer Hochdruckpumpe auf einen Druck von bis zu 2000 bar verdichtet und dem Kraftstoffhochdruckspeicher zugeführt. Von diesem führen Druckleitungen zu den Injektoren der einzelnen Brennräume der Brennkraftmaschine. Die Druckleitungen dienen zur Verbindung des Druckspeichers mit der Hochdruckpumpe einerseits und mit den Injektoren andererseits. Ein an einem Anschlussende der Druckleitung befestigter oder einstückig angeformter Dichtnippel der Druckleitung weist üblicherweise eine Gegenfläche auf, an die eine Überwurfmutter bzw. eine Distanzhülse angreift. Eine Dichtfläche der Druckleitung liegt an einer ihr zugeordneten hohlkegligen Gegendichtfläche des Druckspeichers unmittelbar, d.h. ohne Zwischenschaltung zusätzlicher Dichtungsmittel, dichtend an.

Die DE 101 43 740 A1 offenbart einen Druckleitungsanschluss, der insbesondere zur dichten Verbindung einer Druckleitung mit einem Druckspeicher eines Hochdruckspeichereinspritzsystems vorgesehen ist. Die Druckleitung weist an einem Anschlussende einen Kopfabschnitt auf, der von einer Überwurfmutter umgriffen wird. Die Überwurfmutter presst mit einer ersten Auflagefläche, über eine Distanzbuchse, den Kopfabschnitt der Druckleitung gegen eine Dichtfläche im Druckspeicher. Um die Dichtkraft von der überwurfmutter bzw. der Distanzbuchse auf den Kopfabschnitt zu übertragen, weist der Kopfabschnitt rückseitig eine Anlagefläche auf. Aufgrund der hohen Axialkräfte, die für einen dichten Sitz notwendig sind, kommt es am Übergang zwischen der Anlagefläche und der Druckleitung häufig zu Rissen. Um die Kerbwirkung und damit die Rissbildung an der Druckleitung zu verringern wird der Übergang zwischen der Anlagefläche und der Druckleitung üblicherweise mit einem Radius verrundet, wobei der Übergang zwischen der Anlagefläche und dem Radius bzw. der Rohrleitung und dem Radius im wesentlichen tangential ausläuft. Trotz dieser Verrundung kommt es im Betrieb, aufgrund der dynamischen Belastungen und/oder ungünstiger Spannungsverhältnissen weiterhin zu Rissen bzw. Leitungsbrüchen. Solche Risse oder Brüche sind gefährlich, da der austretende Kraftstoff sich leicht an den heißen Motorbauteilen entzünden kann.

Aufgabe der Erfindung ist es, eine Druckleitung gemäß dem Stand der Technik derart weiterzubilden, dass Leitungsbrüche aufgrund dynamischer Belastungen oder ungünstiger Spannungsverhältnisse, wirkungsvoll verhindert werden.

Diese Aufgabe wird durch die Merkmale des unabhängigen Patentanspruchs gelöst. Vorteilhafte Weiterbildungen der Erfindung ergeben sich aus den Unteransprüchen.

Die erfindungsgemäße Druckleitung weist einen Kopfabschnitt auf an dessen Stirnseite ein Dichtsitz ausgebildet ist. Rückseitig des Dichtsitzes ist eine Anlagefläche ausgebildet, wobei der Übergang von der Anlagefläche zur Druckleitung konkav ausgebildet ist. Der konkave Übergang ist dabei ellipsenförmig ausgebildet, wobei die erste Halbachse und die zweite Halbachse des ellipsenförmigen Übergangs unterschiedliche Längen aufweisen der Gestalt, dass die längere Halbachse im wesentlichen parallel zur Längsachse der Druckleitung verläuft. Durch den ellipsenförmigen Übergang von der Anlagefläche zur Druckleitung ergibt sich in überraschender Weise eine deutliche Spannungsreduzierung im Übergangsbereich zwischen Anlagefläche und Druckleitung, wodurch Leitungsbrüche wirkungsvoll verhindert werden.

Als besonders Vorteilhaft hat sich ein Verhältnis von erster Halbachse zur zweiten Halbachse zwischen 1,5:1 bis 3:1, vorzugsweise 2:1 herausgestellt.

Ein Ausführungsbeispiele der Erfindung wird nachfolgend anhand der schematischen Zeichnungen erläutert. Es zeigt:

Figur 1      einen schematischen Teilschnitt durch eine erfindungsgemäße Druckleitung und

Figur 2      einen Druckleitungsanschluss mit einer Druckleitung nach Figur 1.

Funktionsgleiche Elemente sind nachfolgend figurenübergreifend mit den gleichen Bezugszeichen versehen.

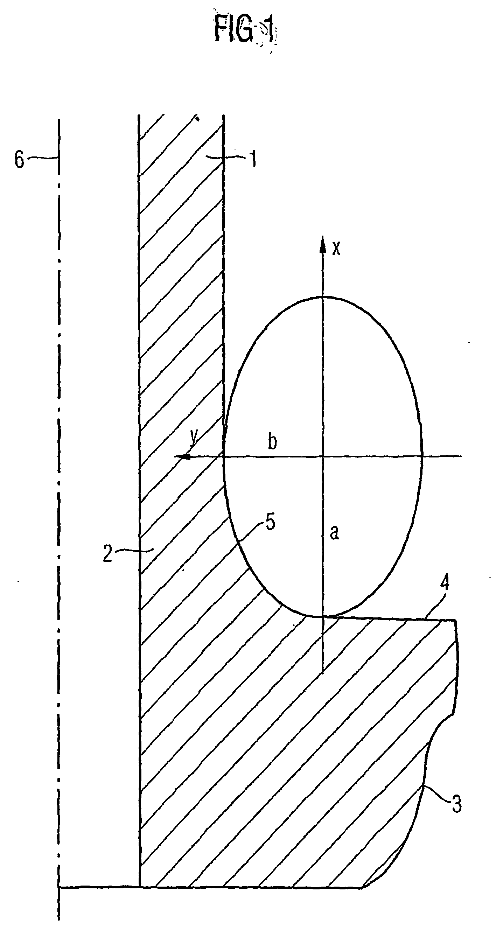

Figur 1 zeigt einen Teilschnitt durch die Druckleitung 1. An der Druckleitung 1 ist ein Kopfabschnitt 2 ausgebildet. Der Kopfabschnitt 2 weist an seiner Stirnseite einen Dichtsitz 3 auf, der im montierten Zustand an einem Dichtsitz eines Bauteils, beispielsweise eines Hochdruckspeichers, anliegt und eine dichte Verbindung zwischen der Druckleitung 1 und dem Hochdruckspeicher gewährleistet. An der Rückseite des Kopfabschnitts 2 ist eine Anlagefläche 4 ausgebildet. Über die Anlagefläche wird im montierten Zustand eine Dichtkraft in den Kopfabschnitt 2 eingebracht. Der Übergang 5 zwischen der Anlagefläche 4 und der Druckleitung 1 ist ellipsenförmig ausgebildet, wobei die erste Halbachse a und die zweite Halbachse b des ellipsenförmigen Übergangs 5 unterschiedliche Längen aufweist dergestalt, dass die längere Halbachse a im wesentlichen parallel zur Längsachse 6 der Druckleitung 1 verläuft. Durch die ellipsenförmige Ausbildung des Übergangs ergibt sich ein besonders spannungsoptimierter Übergang. Hierdurch werden Leitungsbrüche bedingt durch dynamische Belastungen im Betrieb und/oder ungünstige Spannungsverhältnisse sicher vermieden. Leitungsbrüche können insbesondere bei Kraftstoffeinspritzsystemen sehr gefährlich sein, da der austretende Kraftstoff sich leicht an den heißen Motorbauteilen entzünden kann. Somit trägt der ellipsenförmig ausgebildete Übergang 5 wesentlich zur Betriebssicherheit des Kraftstoffeinspritzsystems bei.

Die ellipsenförmige Ausbildung des Übergangs ist dabei nicht teurer als die bisherige Ausbildung des Übergang mit einem einfachen Radius und ist, beispielsweise mit Hilfe einer numerisch gesteuerten Werkzeugmaschine, einfach herzustellen.

Die Ellipsenform ist eindeutig mathematisch beschrieben. Unter der Voraussetzung, dass sich der Mittelpunkt der Ellipse im Koordinatenursprung befindet, lautet die Ellipsengleichung:

$$\frac{x^2}{a^2} + \frac{y^2}{b^2} = 1$$

wobei x und y die jeweiligen rechtwinklig zueinander stehenden Koordinaten bezeichnen (siehe Figur 1).

Als besonders vorteilhaft für einen günstigen Spannungsverlauf hat sich ein Verhältnis von erster Halbachse a zur zweiten Halbachse b zwischen 1,5:1 bis 3:1, vorzugsweise 2:1 herausgestellt.

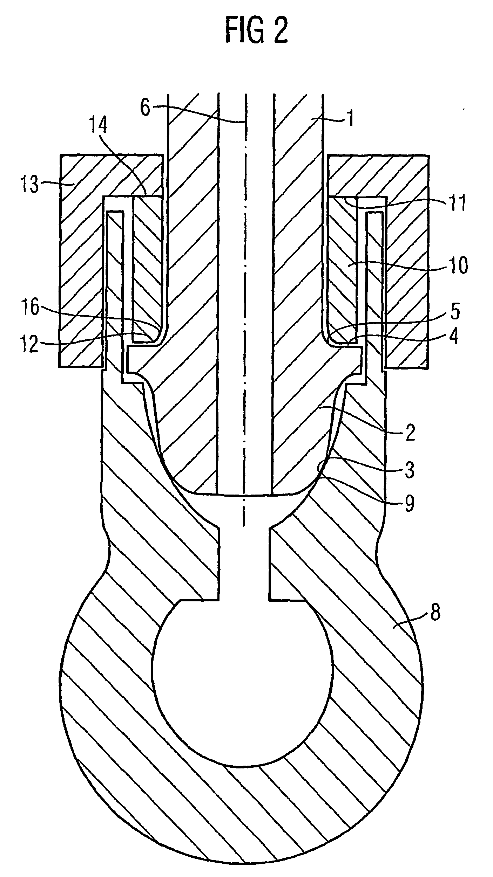

Figur 2 zeigt einen Druckleitungsanschluss zum Anschluss einer Druckleitung 1 nach Figur 1 an ein Bauteil 8, beispielsweise einen Hochdruckspeicher, mit einen darin ausgebildeten Dichtsitz 9. Der Druckleitungsanschluss umfasst ferner eine Distanzbuchse 10 sowie eine Überwurfmutter 13. Die Distanzbuchse 10 umfasst eine erste Stirnseite, welche eine erste Anlagefläche 14 ausbildet und umfasst eine zweite Stirnseite, welche eine zweite Anlagefläche 12 ausbildet. Die Überwurfmutter 13 umfasst eine Druckfläche 11. Im montierten Zustand wird über die Überwurfmutter 13 die Dichtkraft in den Druckleitungsanschluss eingebracht. Die Dichtkraft wird dabei von der Druckfläche 11, der Überwurfmutter 13, in die erste Anlagefläche 14 der Distanzbuchse 10 eingebracht. Die eingebrachte Dichtkraft wird über die zweite Anlagefläche 12, der Distanzbuchse 10, weiter in die rückseitig am Kopfabschnitt 2, der Druckleitung 1, ausgebildeten Anlagefläche 4 übertragen. Hierdurch wird der am Kopfabschnitt 2, der Druckleitung 1, ausgebildete Dichtsitz 3 in den am Bauteil 8 ausgebildeten Dichtsitz 9 gepresst. Aufgrund des Anpressdrucks wird eine dichte Verbindung zwischen der Druckleitung 1 und dem Bauteil 8 hergestellt. Durch den ellipsenförmigen Übergang 5 von der Anlagefläche 4 zur Druckleitung 1 ist auch bei sehr hohen Dichtkräften gewährleistet, dass es nicht zu einem Druckleitungsbruch im Bereich des Übergangs kommt.

Der Übergang 16 von der Innenfläche der Distanzbuchse 10 zur zweiten Stirnseite ist vorteilhafter Weise konvex ausgebildet. Hierdurch kann die Distanzbuchse eng an der Druckleitung 1 anliegen ohne dass sie im Bereich des Übergangs 5 an der Druckleitung 1 anliegt.

Bei einer besonders vorteilhaften Ausgestaltung der Distanzbuchse 10 ist der Übergang 16 von der Innenfläche der Distanzbuchse 10 zur zweiten Stirnseite ellipsenförmig ausgebildet. Durch die komplementäre Ausbildung von Druckleitung und Distanzbuchse im Übergangsbereich kann die Distanzbuchs 10 besonders nah um die Druckleitung 1 angeordnet werden. Hierdurch ist ein besonders sicherer Sitz der Distanzbuchse, auch bei einer wechselnden Beanspruchung des Druckleitungsanschlusses gewährleistet.

Die Überwurfmutter 13 und die Distanzbuchse 10 können auch einstückig ausgebildet sein. Hierdurch ergibt sich eine hohe Bauteilfestigkeit und eine besonders einfache Montage des Druckleitungsanschlusses.

Die Erfindung zeichnet sich somit durch einen ellipsenförmigen Übergang zwischen der Anlagefläche 4 und der Druckleitung 1 aus. Durch den ellipsenförmigen Übergang ergibt sich ein besonders spannungsoptimiertes Bauteil, wodurch Druckleitungsbrüche wirkungsvoll verhindert werden können.

## Patentansprüche

1. Druckleitung (1) mit wenigstens einem Leitungsrohr und einem Kopfabschnitt (2), der an seiner Stirnseiten einen Dichtsitz (3) aufweist und einer, rückseitig am Kopfabschnitt (2) ausgebildeten, Anlagefläche (4) wobei der Übergang (5) von der Anlagefläche (4) zum Leitungsrohr der Druckleitung (1) konkav ausgebildet ist

   **dadurch gekennzeichnet, dass**

   der konkave Übergang (5) ellipsenförmig ausgebildet ist, wobei die erste Halbachse (a) und die zweite Halbachse (b) des ellipsenförmigen Übergangs (5) unterschiedliche Längen aufweisen dergestalt, dass die längere Halbachse (a) im Wesentlichen parallel zur Längsachse (6) der Druckleitung (1) verläuft.

2. Druckleitung (1) nach Anspruch 1,
   **dadurch gekennzeichnet, dass**
   das Verhältnis von erster Halbachse (a) zu zweiter Halbachse (b) zwischen 1,5:1 bis 3:1, vorzugsweise 2:1 beträgt.

3. Druckleitungsanschluss zum Anschluss einer Druckleitung (1) mit wenigstens einem Leitungsrohr und einem Kopfabschnitt (2) der an seiner Stirnseite einen Dichtsitz (3) aufweist und einer rückseitig am Kopfabschnitt (2) ausgebildeten, Anlagefläche (4) an ein Bauteil (8) mit einem darin ausgebildeten Dichtsitz (9), mit

   - einer Distanzbuchse (10), umfassend eine erste Stirnseite, welche eine erste Anlagefläche (11) ausbildet und umfassend eine zweite Stirnseite, welche eine zweite Anlagefläche (12) ausbildet; und
   - einer Überwurfmutter (13) umfassend eine Druckfläche (14)

wobei die Überwurfmutter (13) im montierten Zustand über die Druckfläche (14) eine Kraft in die erste Anlagefläche (11) der Distanzbuchse (10) einbringt, die eingebrachte Kraft über die zweite Anlagefläche (12) der Distanzbuchse (10) in die rückseitig am Kopfabschnitt (2) ausgebildete Anlagefläche (4) übertragen wird und den am Kopfabschnitt (2) der Druckleitung (1) ausgebildeten Dichtsitz (3) in den am Bauteil (8) ausgebildeten Dichtsitz (9) presst **dadurch gekennzeichnet, dass**
die Druckleitung (1) nach einem der vorherigen Ansprüche ausgebildet ist.

4. Druckleitungsanschluss nach Anspruch 3,
   **dadurch gekennzeichnet, dass**
   die Distanzbuchse (10) am Übergang(16) von der Innenfläche zur zweiten Stirnseite konvex ausgebildet ist.

5. Druckleitungsanschluss nach Anspruch 4,
   **dadurch gekennzeichnet, dass**
   die Distanzbuchse (10) am Übergang (16) von der Innenfläche zur zweiten Stirnseite ellipsenförmig ausgebildet ist.

6. Druckleitungsanschluss nach einem der Ansprüche 3 bis 5,
   **dadurch gekennzeichnet, dass**
   die Überwurfmutter (13) und die Distanzbuchse (10) einstückig ausgebildet sind.

## Claims

1. Pressure line (1) with at least one pipe and head section (2) which features a sealing seat (3) on its end face and a bearing surface (4) embodied on the back of the head section (2), with the transition (5) from the bearing surface (4) to the pipe of the pressure line (1) being embodied as a concave shape. **characterized in that**
   the concave transition (5) is embodied in the shape of an ellipse, in which case the first half axis (a) and the second half axis (b) of the elliptical transition (5) have different lengths, such that the longer half axis (a) runs essentially in parallel to the longitudinal axis (6) of the pressure line (1).

2. Pressure line (1) in accordance with claim 1,
   **characterized in that**
   the ratio of first half axis (a) to second half axis (b) amounts to between 1.5:1 to 3:1, preferably 2:1.

3. Pressure line connection for connecting a pressure line (I) with at least one pipe and head section (2) which features a sealing set (3) on its end face and a bearing surface (4) embodied on the back of the head section (2) to a component (8) with a sealing seat (9) embodied in it, with

   - a spacer (10), comprising a first end face, which forms a first bearing surface (11) and comprising a second end face which forms a second bearing surface (12);and
   - a union nut (13) including a pressure surface (14) with the union nut (13) in the assembled state introducing via the pressure surface (14) a force into the first bearing surface (11) of the spacer (10) the force exerted being transmitted via the second bearing surface (12) of the spacer (10) into the bearing surface (4) embodied at the rear of the head section (2) and the sealing seat (3) embodied on the head section (2) of the pressure line (1) pressing into the sealing seat (9) embodied on the component (8).

   **characterized in that**
   the pressure line (1) is embodied according to one of the previous claims.

4. Pressure line connection in accordance with claim 3,
   **characterized in that**
   the spacer (10) at the transition (16) from the inner surface to the second end face is embodied in a convex shape.

5. Pressure line connection in accordance with claim 4,
   **characterized in that**
   the spacer (10) at the transition (16) from the inner surface to the second end face is embodied as an elliptical shape.

6. Pressure line connection in accordance with one of the claims 3 to 5,
   **characterized in that**
   the union nut (13) and the spacer (10) are embodied in one piece.

## Revendications

1. Conduite de pression (1) possédant au moins un tube de conduite et un segment de tête (2) qui présente une portée d'étanchéité (3) à son côté frontal et une surface d'appui (4) formée sur le segment de tête (2) sur son côté arrière, la transition (5) entre la surface d'appui (4) et le tube de la conduite de pression (1) étant de forme concave,
   **caractérisée en ce que** la transition concave (5) est de forme ellipsoïdale, le premier demi-axe (a) et le second demi-axe (b) de la transition ellipsoïdale (5) présentant des longueurs différentes de telle manière que le grand demi-axe (a) s'étende sensiblement parallèlement à l'axe longitudinal (6) de la conduite de pression (1).

**2.** Conduite de pression (1) selon la revendication 1, **caractérisée en ce que** le rapport du premier demi-axe (a) au second demi-axe (b) est compris entre 1,5 :1 et 3 :1 et est de préférence égal à 2 :1.

**3.** Raccord de conduite de pression pour raccorder une conduite de pression (1) possédant au moins un tube de conduite et un segment de tête (2) qui présente une portée d'étanchéité (3) sur son côté frontal et une surface d'appui (4) formée sur le segment de tête (2) sur son côté arrière, à un élément (8) dans lequel est formée une portée d'étanchéité (9), comprenant :

- une douille entretoise (10) comprenant un premier côté frontal qui forme une première surface d'appui (11), et comprenant un second côté frontal qui forme une seconde surface d'appui (12) ; et
- un écrou de raccord (13) comprenant une surface de pression (14),

dans lequel, dans l'état monté, l'écrou de raccord (13) applique une force à la première surface d'appui (11) de la douille entretoise (10) par l'intermédiaire d'une surface de pression (14), la force appliquée est transmise, par l'intermédiaire de la seconde surface d'appui (12) de la douille entretoise (10) à la surface d'appui (4) formée sur le segment de tête (2), sur son côté arrière, et presse la portée d'étanchéité (9) formée sur le segment de tête (2)de la conduite de pression (1) dans la portée d'étanchéité (9) formée sur l'élément (8), **caractérisé en ce que** la conduite de pression (1) est conformée selon l'une des revendications précédentes.

**4.** Raccord de conduite de pression selon la revendication 3, **caractérisé en ce que** la douille entretoise (10) est de forme convexe à la transition (16) entre la surface intérieure et le second côté frontal.

**5.** Raccord de conduite de pression selon la revendication 4, **caractérisé en ce que** la douille entretoise (10) est de forme ellipsoïdale à la transition (16) entre la surface intérieure et le second côté frontal.

**6.** Raccord de conduite de pression selon une des revendications 3 à 5, **caractérisé en ce que** l'écrou de raccord (13) et la douille entretoise (10) sont formés en une seule pièce.

## FIG 1

# FIG 2